# EUROPÄISCHE PATENTSCHRIFT

(11) **EP 0 503 403 B1**
(45) Veröffentlichungstag und Bekanntmachung des Hinweises auf die Patenterteilung: **14.08.1996**
(21) Anmeldenummer: 92103494.8
(22) Anmeldetag: 29.02.1992
(51) Int. Cl.: B07C 3/08, B07C 3/06, B65G 47/46

(54) **Anlage zum Sortieren und/oder Verteilen von Zielstationen zugeordneten Gegenständen und Verwendung der Anlage**
System for sorting and for distribution of objects according to their destination and usage of the system
Système de tri et/ou de distribution d'objets selon leur destination et l'usage de système

(30) Priorität: 08.03.1991 CH 704/91
(43) Veröffentlichungstag der Anmeldung: 16.09.1992
(73) Patentinhaber: SINOMEC AG, CH-8617 Mönchaltorf (CH)
(72) Erfinder: Sturzenegger, Jakob, CH-8633 Wolfhausen (CH)
(74) Vertreter: Dittrich, Horst

(56) Entgegenhaltungen:
- CH-A- 636 285
- CH-A- 677 775
- DE-B- 2 523 835

## Beschreibung

Die vorliegende Erfindung betrifft eine Anlage zum Sortieren und/oder Verteilen von Zielstationen zugeordneten Gegenständen an diese Zielstationen, mit einem Fördermittel für zur Aufnahme der Gegenstände vorgesehene Transportbehälter, und mit Zuführkanäle zu den Zielstationen aufweisenden Sortierabgängen im Bereiche des Fördermittels, wobei die Gegenstände oberhalb der Sortierabgänge aus den Transportbehältern in die Zuführkanäle entleert werden.

Anlagen dieser Art sind heute für den innerbetrieblichen Materialtransport weit verbreitet und werden beispielsweise in Bibliotheken, Spitälern, Grossversandhäusern, Verlagen, in der Arzneimittel- und Kosmetikindustrie und in Foto-Grosslabors verwendet.

In der CH-A-636 285 ist eine Anlage zum Sortieren und Verteilen von mit fotografischem Material bestückten Auftragstaschen beschrieben, bei welcher die Zuführkanäle als Fallschächte ausgebildet sind, durch welche die Auftragstaschen in an den Stationen angeordnete schachtelartige Sammelbehälter fallen.

Das Prinzip, die zu sortierenden Gegenstände frei in die jeweiligen Sammelbehälter fallen zu lassen, ist zwar sehr einfach, setzt aber voraus, dass die Gegenstände von einer solchen Art sind, dass sie oder ihr Inhalt beim Hinabfallen nicht beschädigt werden können. Dies trifft ohne Einschränkungen praktisch nur auf fotografische Auftragstaschen und mit gewissen Einschränkungen eventuell auf Arzneimittel und Kosmetika zu. Bei Büchern wird das System schon problematisch und für Ton- und Bildträger wie Musik- und Videokassetten, Platten und Compact Discs ist es praktisch unbrauchbar, weil diese beim Hinabfallen oder Hinabrutschen in die Sammelbehälter beschädigt werden können.

Dazu kommt, dass bei dieser Art der Verteilung der Gegenstände in die Sammelbehälter, die letzteren in aller Regel völlig ungeordnet gefüllt werden, was die weitere Verarbeitung ganz wesentlich erschwert. Man braucht hier nur an den Fall zu denken, dass die Anlage in der Verteilzentrale eines Grossverteilers oder einer Kaufhauskette steht, von wo aus die einzelnen Filialen individuell mit Bild- und/oder Tonträgern beliefert werden. Dann sollten selbstverständlich in den einzelnen Stationen die Bild- oder Tonträger für die jeweilige Filiale in Form eines geordneten Stapels und nicht eines wirren Haufens vorliegen.

Ausserdem führt das ungeordnete Füllen der Sammelbehälter auch dazu, dass deren Aufnahmekapazität nur teilweise ausgenützt wird. Und dies bedingt unnötig viele Sammelbehälter und in letzter Konsequenz auch eine Erhöhung der Kapazität für deren Transport. Diese Ueberlegung gelten ohne Einschränkungen auch für die Verarbeitung fotografischer Auftragstaschen.

Aus der DE-A-25 23 835 ist eine Verteilfördereinrichtung für rechteckige flache Sendungen bekannt, bei der die Sendungen im wesentlichen in waagrechter Richtung und mit einer Unterkante entlang einer Auflageebene geführt werden. Aus der Verteilfördereinrichtung fallen die Sendungen wiederum unkontrolliert in einen Stapelbehälter. Auch mit dieser Einrichtung werden die Behälter letztlich ungeordnet gefüllt und die Sendungen sind einem unkontrollierten freien Fall ausgesetzt, der zu deren Beschädigung führen kann.

Durch die Erfindung soll nun eine verbesserte Sortier- und Verteilungsanlage angegeben werden, mit welcher auch stossempfindliche Gegenstände, insbesondere Bild- und Tonträger sortiert und verteilt werden können, und zwar möglichst einfach zu handhabenden Anordnung oder Reihung vorliegen.

Diese Aufgabe wird erfindungsgemäss dadurch gelöst, dass die Zuführkanäle zur Führung der Gegenstände einen länglichen, rechteckförmigen Querschnitt, einen Einlaufteil, einen, mit einem Drall versehenen Mittelteil und einen Auslaufteil aufweisen vom Fördermittel weg schräg nach unten geführt sind und daß das einlauf- und das auslaufseitige Ende der Zuführ Kanäle gegeneinander um 90° verdreht sind.

Dadurch wird eine an die jeweiligen Anforderungen angepasste Stapelung der Gegenstände in den Zielstationen ermöglicht, was die Bereitstellung der Gegenstände für den Versand wesentlich erleichtert. Ausserdem führt die positive Führung der Gegenstände in den Zuführkanälen auch zu einer Abbremsung der Gegenstände, wodurch die Gefahr von Beschädigungen verringert wird. Selbstverständlich kann diese Bremswirkung durch weitere Massnahmen, wie zum Beispiel eine bremsende Innenbeschichtung der Zuführkanäle, verstärkt werden.

Die Erfindung betrifft weiter eine Verwendung der genannten Anlage zum Sortieren und/oder Verteilen von schachtelartigen Gegenständen, wie Tonträgern oder Büchern. Diese Verwendung ist dadurch gekennzeichnet, dass die Zuführkanäle einen Drall aufweisen, wodurch beim Durchlauf eine Drehung der Gegenstände in die genannte Uebergabeposition erfolgt.

Nachfolgend wird die Erfindung anhand von Ausführungsbeispielen und der Zeichnungen näher erläutert; dabei zeigt:
- Fig. 1: eine schematische Darstellung eines erfindungsgemässen Sortierabgangs;
- Fig. 2: eine Ansicht in Richtung des Pfeiles II von Fig. 1,
- Fig. 3,4: je eine Detailvariante des Sortierabgangs von Fig. 1.

Für die folgende Beschreibung wird der Grundaufbau einer Anlage zum Sortieren und Verteilen von Zielstationen zugeordneten Gegenständen als bekannt vorausgesetzt und es wird in diesem Zusammenhang auf die CH-A-636 285 und auf die CH-A-677 775 verwiesen.

Der letztgenannten Literaturstelle ist zu entnehmen, dass bei einem System der genannten Art die später nach Adressen zu sortierenden Gegenstände, seien dies Fototaschen, Bild- oder Tonträger, in Transportbehälter gefüllt werden, welche eine Mehrzahl von Fächern aufweisen. Die Transportbehälter gelangen über ein geeignetes Fördersystem von beispielsweise Transportbändern, -rollen oder -ketten zu Sortierabgängen, an denen eine teilweise oder vollständige Leerung der Behälter erfolgt, wobei die einzelnen Fächer gezielt geöffnet werden, und ihr Inhalt der zugeordneten Zielstation zugeführt wird.

Darstellungsgemäss umfasst die Anlage ein auf dem Boden stehendes Gestell 1, welches an seinem Kopfteil eine Transportbahn für schachtelartige Transportbehälter 2 aufweist. Diese Transportbahn ist in den Figuren durch zwei Längsschienen 3 symbolisiert, welche entsprechende Transportmittel, wie beispielsweise Transportbänder und Führungsrollen tragen, auf denen die Transportbehälter 2 laufen. Die letzteren weisen mehrere Querfächer auf, welche je einen Gegenstand, darstellungsgemäss einen Tonträger 4, also eine Compact-Disc oder eine Musikkassette, enthalten. Jedes Fach ist nach unten durch einen durch elektromechanische oder magnetische Mittel individuell betätigbaren Klapp- oder Schwenkboden abgeschlossen. Bei dessen Oeffnung rutscht der im entsprechenden Fach befindliche Tonträger 4 nach unten aus diesem heraus und gelangt über einen Teil eines sogenannten Sortierabgangs bildenden Zuführkanal 5 zu seiner Zielstation. In den Figuren sind verschiedene Varianten dieser Sortierabgänge dargestellt, wobei die Zuführkanäle 5 im wesentlichen jeweils gleich sind.

Von den Zuführkanälen 5 gelangen die Tonträger 4 in ein Magazin, welchem sie schliesslich für den Versand entnommen werden. Um auch die Vorbereitung für den Versand möglichst einfach und bedienungsfreundlich zu gestalten, ist es wünschenswert, dass die Tonträger 4 in dem genannten Magazin in Form eines geordneten Stapels vorliegen. Da die Tonträger 4 im Fach des Transportbehälters 2 stehend angeordnet sind, fallen sie beim Oeffnen des Fachbodens hochkant nach unten. Wenn nun der Zuführkanal 5 als einfacher Fallschacht ausgebildet wäre, dann würden die Tonträger 4 frei nach unten fallen oder rutschen, was, ganz abgesehen von der Gefahr möglicher Beschädigungen, die Bildung eines geordneten Stapels im Magazin verunmöglichen würde.

Darstellungsgemäss weist nun jeder Zuführkanal 5 einen dem Querschnitt der Tonträger 4 annähernd angepassten länglichen Querschnitt auf und ist zwischen seinem Einlauf- und seinem Auslaufteil mit einem Drall versehen, so dass die in vertikaler Lage in den Einlaufteil fallenden Tonträger 4 um die Längsachse des Zuführkanals 5 um 90° gedreht werden. In dieser Lage können die Tonträger 4 dem Magazin in einer die Bildung eines geordneten Stapels ermöglichenden definierten Uebergabeposition angeboten werden. Je nachdem, ob dieser Stapel horizontal oder vertikal ausgerichtet ist, sind die Tonträger in dieser Uebergabeposition in einer im wesentlichen vertikalen beziehungsweise horizontalen Lage.

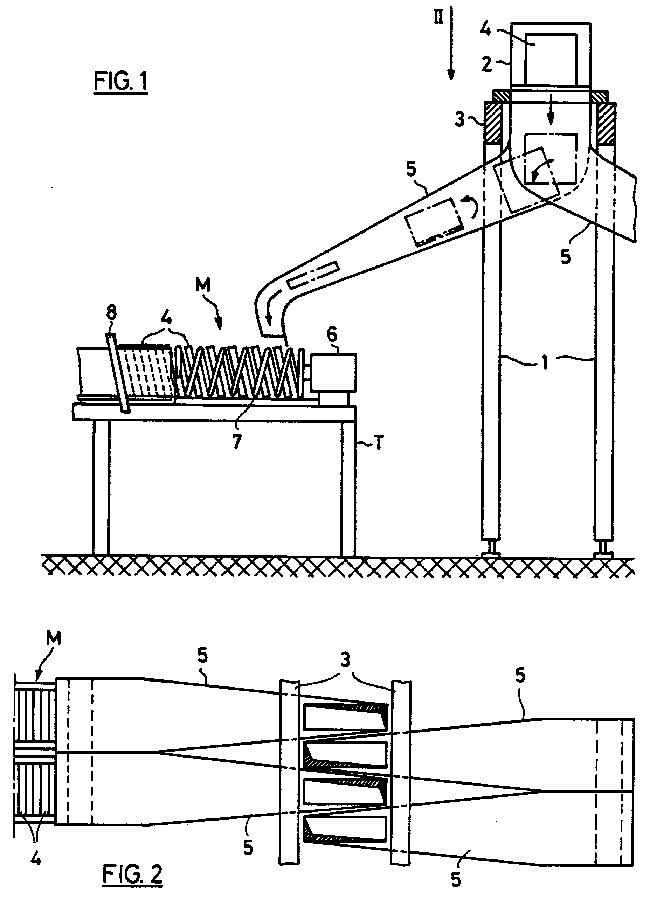

Die Fig. 1, 2 und 3 zeigen je ein Ausführungsbeispiel eines Magazins mit horizontalem Speicherraum. Gemäss Fig. 1 enthält das auf einem Tisch T angeordneten Magazin M einen von einem Motor 6 angetriebenen Spiralförderer 7, durch welchen die zugeführten Tonträger 4 vom Auslaufteil des Zuführkanals 5 weg gegen einen federbelasteten Anschlag 8 transportiert werden. Dieser wird durch den wachsenden Stapel gegen die Federkraft vom Spiralförderer 7 weg nach aussen gedrückt und gleitet bei Entnahme des Stapels oder eines Teils von diesem um ein entsprechendes Stück gegen den Spiralförderer 7 zurück. Der Auslaufteil des Zuführkanals 5 ist gegen die Rutschrichtung der Tonträger 4 in dem den Drall aufweisenden Mittelteil des Zuführkanals umgebogen, so dass die Tonträger dem Spiralförderer 7 in einer für die Stapelbildung optimalen, leicht gekippten Position angeboten werden.

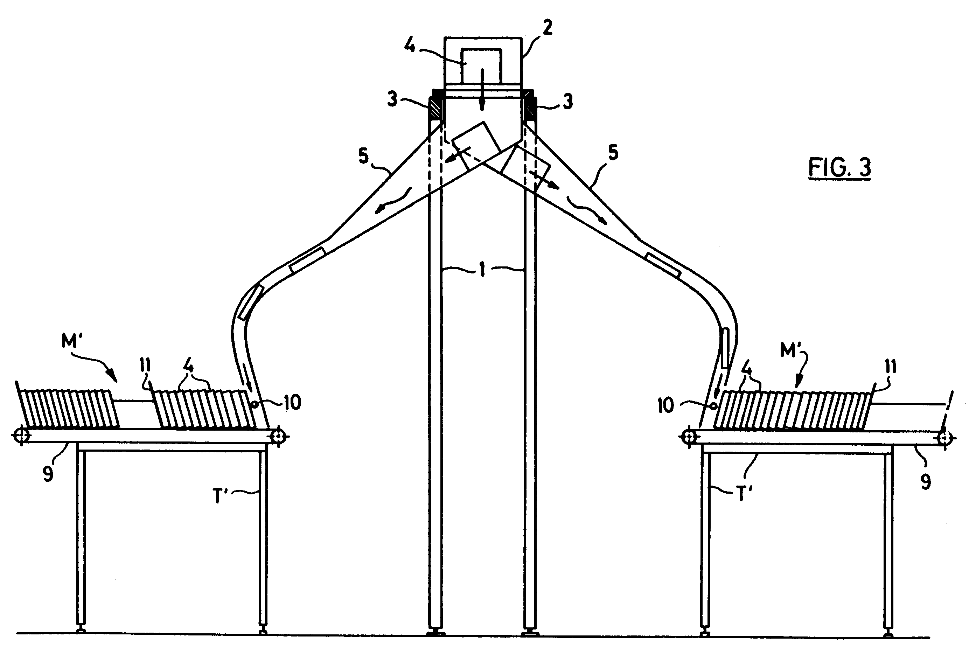

Beim Ausführungsbeispiel gemäss Fig. 3 enthält das Magazin M' ein auf einem Tisch T' montiertes Förderband 9, welches intermittierend angetrieben ist. Der Bandvorschub ist durch eine im Auslaufbereich des Zuführkanals 5 angeordnete Lichtschranke 10 gesteuert. Dem Förderband 9 ist ein mit diesem bewegter Anschlag 11 zugeordnet, welcher den vordersten Tonträger des Stapels gegen Umfallen sichert. Der Anschlag 11 ist auf einer sich in Längsrichtung des Förderbands 9 erstreckenden Führungsstange verschiebbar gelagert und kann relativ zum Förderband beliebig positioniert werden.

Die beiden Ausführungsbeispiele der Fig. 1, 2 und 3 haben den Vorteil, dass eine geordnete Entnahme der Tonträger 4 aus dem Magazin M bzw. M' gewährleistet ist, dass der Füllstand der Magazine gut überwacht, und dass durch entsprechende Höhenverstellung des Tisches T, T' die Arbeitsplatzhöhe optimal gewählt werden kann.

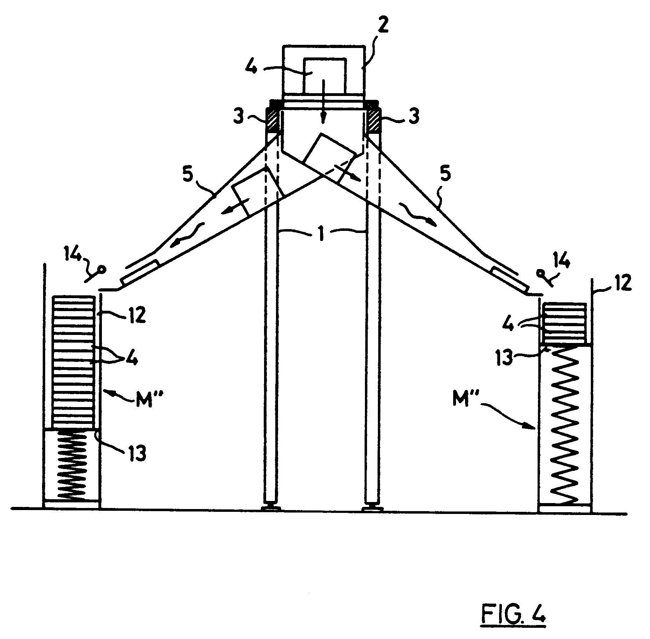

Bei dem in Fig. 4 dargestellten Ausführungsbeispiel ist das mit dem Bezugszeichen M'' bezeichnete Magazin durch einen sogenannten Federbehälter gebildet, wie er von Sortiervorrichtungen für Fotogrosslabors bekannt ist. Diese Federbehälter bestehen im wesentlichen aus einer rohrförmigen Säule 12 mit rechteckigem Querschnitt, in welcher ein federnd gelagerter Aufnahmetisch 13 geführt ist. Im Unterschied zu den Fig. 1 und 3 ist der Auslaufteil des Zuführkanals 5 nicht gegen die Rutschrichtung umgebogen, sondern läuft in eine Art von Schanzentisch aus, von welchem die Tonträger 4 in horizontaler Lage auf den Aufnahmetisch 13 gelangen. Selbstverständlich kann die Absenkung des Aufnahmetisches 13 anstatt durch Federkraft auch pneumatisch oder elektronisch gesteuert erfolgen.

Bei diesem Ausführungsbeispiel ist die Zielstation besonders einfach und kostengünstig ausgebildet, da keinerlei motorisch angetriebene Fördermittel erforderlich sind. Dafür ist die Leerung der Magazine M'' nicht so unproblematisch wie bei den Magazinen M und M' (Fig. 1 bzw. Fig. 3), da die Tonträger 4 ständig von oben nachrutschen und dadurch die Leerung behindern. Um eine ungestörte Leerung zu ermöglichen, ist am Ausgang jedes Zuführkanals 5 eine Entnahmesperre 14 vorgesehen. Da auch dann die für die Leerung des Magazins M'' zur Verfügung stehende Zeit relativ kurz ist, empfiehlt es sich, pro Zielstation zwei Federbehälter vorzusehen, die jeweils abwechselnd in der Beschickungs- und Entnahmeposition sind.

Die Ausdrücke Sortieren und Sortierabgang in der vorstehenden Beschreibung sind nicht so zu verstehen, dass unbedingt eine Sortierung erfolgen muss. Wesentlich ist das Vorhandensein mehrerer Zielstationen, die von den Transportbehältern 2 bedient werden, und an denen dann ein Abwurf des jeweiligen Transportguts stattfindet. Wenn auch die Anlage in Zusammenhang mit der Verteilung von Tonträgern beschrieben worden ist, so ist ihre Anwendung selbstverständlich nicht auf diesen Fall beschränkt. Sie kann überall dort eingesetzt werden, wo ein gesteuerter Abwurf von Gütern an bestimmten Zielstationen oder eine Feinsortierung erfolgen muss, beispielsweise in Versandhäusern jeder Art, in Foto-Grosslabors, bei Verlagen und bei Grossverteilern.

## Patentansprüche

1. Anlage zum Sortieren und/oder Verteilen von Zielstationen zugeordneten Gegenständen (4) an diese Zielstationen, mit einem Fördermittel für zur Aufnahme der Gegenstände vorgesehene Transportbehälter (2), und mit Zuführkanäle zu den Zielstationen aufweisenden Sortierabgängen im Bereiche des Fördermittels, wobei die Gegenstände (4) oberhalb der Sortierabgänge aus den Transportbehältern (2) in die Zuführkanäle (5) entleert werden, dadurch gekennzeichnet, dass die Zuführkanäle (5) zur Führung der Gegenstände einen länglichen, rechteckigen Querschnitt, einen Einlaufteil, einen, mit einem Drall versehenen Mittelteil und einen Auslaufteil aufweisen, vom Fördermittel weg schräg nach unten geführt sind und dass das einlauf- und das auslaufseitige Ende der Zuführkanäle gegeneinander um 90° verdreht sind.

2. Anlage nach Anspruch 1, dadurch gekennzeichnet, dass Magazine (M, M', M'') zur Aufnahme der von den Zuführkanälen (5) übergebenen Gegenstände (4) vorgesehen sind, welche zur geordneten Stapelung der Gegenstände ausgebildet sind.

3. Anlage nach Anspruch 2, dadurch gekennzeichent, dass die Magazine (M) einen motorisch antreibbaren Spiralförderer (7) zur Aufnahme der Gegenstände (4) und zu deren Förderung in einen Speicherraum aufweisen.

4. Anlage nach Anspruch 2, dadurch gekennzeichnet, dass die Magazine (M') ein antreibbares Förderband (9) zur Aufnahme der Gegenstände (4) aufweisen.

5. Anlage nach Anspruch 4, dadurch gekennzeichnet, dass das Förderband (9) intermittierend antreibbar und dass sein Antrieb durch eine im Bereich der Uebernahmestelle der Gegenstände (4) angeordneten Sensor, vorzugsweise eine Lichtschranke (10) gesteuert ist.

6. Anlage nach Anspruch 2, dadurch gekennzeichnet, dass die Magazine (M'') einen in vertikaler Richtung verstellbaren, federnd gelagerten Aufnahmetisch (13) für die Gegenstände (4) aufweisen.

7. Anlage nach Anspruch 1, dadurch gekennzeichnet, dass am Auslauf des Zuführkanals (5) eine Entnahmesperre (14) vorgesehen ist.

## Claims

1. System for sorting and/or distributing articles (4), assigned to destination stations, to said destination stations, having a conveying means for transporting containers (2) provided for receiving the articles, and having sorting exits, which have feed ducts to the destination stations, in the region of the conveying means, the articles (4) being emptied, above the sorting exits, from the transporting containers (2) into the feed ducts (5), characterized in that, in order to guide the articles, the feed ducts (5) have an elongate, rectangular cross-section, an inlet part, a central part provided with a twist, and an outlet part, and are guided obliquely downwards away from the conveying means, and in that the inlet end and the outlet end of the feed ducts are turned through 90° with respect to one another.

2. System according to Claim 1, characterized in that provision is made for magazines (M, M', M'') for receiving the articles (4) transferred from the feed ducts (5), the magazines being designed for ordered stacking of the articles.

3. System according to Claim 2, characterized in that the magazines (M) have a motor-driveable helical conveyor (7) for receiving the articles (4) and for conveying the latter into a storage space.

4. System according to Claim 2, characterized in that the magazines (M') have a driveable conveying belt (9) for receiving the articles (4).

5. System according to Claim 4, characterized in that the conveying belt (9) can be driven intermittently, and in that its drive is controlled by a sensor, preferably a light barrier (10), arranged in the region of the receiving location of the articles (4).

6. System according to Claim 2, characterized in that the magazines (M'') have a vertically adjustable, resiliently mounted receiving table (13) for the articles (4).

7. System according to Claim 1, characterized in that a removal barrier (14) is provided at the outlet of the feed duct (5).

## Revendications

1. Système pour le tri et/ou la distribution d'objets (4) associés à des stations de destination, à ses stations de destination, avec un moyen de transport pour des récipients de transport (2) prévus pour la réception des objets, et avec des sorties de tri comportant des canaux d'amenée aux stations de destination dans la région du moyen de transport, les objets (4) étant évacués des récipients de transport dans les canaux d'amenée (5), au-dessus des sorties de tri, caractérisé en ce que les canaux d'amenée (5) présentent pour le guidage des objets une section transversale rectangulaire oblongue, une portion d'admission, une portion médiane tordue, et une portion de sortie, sont amenés au loin du moyen de transport obliquement vers le bas, et en ce que l'extrémité côté d'admission et l'extrémité côté sortie, des canaux d'amenée sont tournés, l'une par rapport à l'autre, de 80°.

2. Système selon la revendication 1, caractérisé en ce que des magasins (M, M', M'') sont prévus pour la réception des objets (4) transférés par les canaux d'amenée (5) et qui sont configurés pour un empilage ordonné des objets.

3. Système selon la revendication 2, caractérisé en ce que les magasins (M) comprennent un convoyeur en spirale (7) entraîné par un moteur, pour la réception des objets (4) et pour leur transport dans un espace de stockage.

4. Système selon la revendication 2, caractérisé en ce que les magasins (M') comprennent une bande transporteuse (9) susceptible d'être entraînée, pour la réception des objets (4).

5. Installation selon la revendication 4, caractérisée en ce que la bande transporteuse (9) est susceptible d'être entraînée, de façon intermittente, et en ce que son entraînement est commandé par un capteur, de préférence une barrière de lumière (10), disposée dans une zone de l'emplacement de réception des objets (4).

6. Système selon la revendication 2, caractérisé en ce que les magasins (M'') comprennent une table de réception (13) des objets (4), qui est déplaçable dans la direction verticale et supportée élastiquement.

7. Système selon la revendication 1, caractérisé en ce qu'à la sortie du canal d'amenée (5) est prévue une barrière de préhension (14).
